# EUROPÄISCHE PATENTSCHRIFT

(11) **EP 2 973 951 B1**
(45) Veröffentlichungstag und Bekanntmachung des Hinweises auf die Patenterteilung: **08.03.2017**
(21) Anmeldenummer: 14713440.7
(22) Anmeldetag: 26.03.2014
(51) Int. Cl.: H02K 3/24, H02K 9/06

(54) **ELEKTRISCHE MASCHINE MIT EINER VERBESSERTEN KÜHLUNG DES WICKELKOPFS**
ELECTRIC MACHINE HAVING AN IMPROVED COOLING OF THE WINDING HEAD
MOTEUR ÉLECTRIQUE PRÉSENTANT UN REFROIDISSEMENT AMÉLIORÉ DE LA TÊTE DE BOBINE

(30) Priorität: 22.04.2013 DE 102013207241
(43) Veröffentlichungstag der Anmeldung: 20.01.2016
(73) Patentinhaber: Siemens Aktiengesellschaft, 80333 München (DE)
(72) Erfinder: SEIBICKE, Frank, 14822 Borkheide (DE)
(86) Internationale Anmeldenummer: PCT/EP2014/056023
(87) Internationale Veröffentlichungsnummer: WO 2014/173601

(56) Entgegenhaltungen:
- EP-A1- 2 512 009
- EP-A2- 2 109 207
- EP-A2- 2 738 915
- WO-A2-2011/051228
- DE-A1- 19 544 699
- DE-A1-102008 033 959
- US-A- 5 652 469
- US-A1- 2004 084 976

## Beschreibung

Die Erfindung betrifft eine elektrische Maschine umfassend einen entlang einer Rotorachse ausgerichteten Rotor, einen konzentrisch zur Rotorachse angeordneten Stator, zumindest einen konzentrisch zur Rotorachse angeordneten Wickelkopf, welcher jeweils in axialer Richtung aus dem Stator herausragt und durch eine Kühlmittel-Strömung kühlbar ist, sowie zumindest ein erstes Leitelement, welches strömungstechnisch stromaufwärts des jeweiligen Wickelkopfs angeordnet ist, wobei das zumindest eine erste Leitelement derart ausgebildet ist, dass eine Erhöhung der Strömungsgeschwindigkeit der Kühlmittel-Strömung zum jeweiligen Wickelkopf bewirkbar ist.

Die Wickelköpfe der Wicklungen elektrischer Maschinen ragen axial aus den magnetischen Aktivteilen heraus und bedürfen einer separaten Kühlung, welche zumeist durch umströmende Kühlfluide realisiert wird. Insbesondere bei Maschinen großer Durchmesser oder geringer Drehzahlen, deren Wickelköpfe mit Luft oder anderen gasförmigen Medien gekühlt werden, kann aufgrund geringer Strömungsgeschwindigkeiten meist nur ein geringer Wärmeübergangskoeffizient realisiert werden.

Üblicherweise durchströmen die gasförmigen Kühlfluide den Wickelkopf in überwiegend radialer und teilweise axialer Richtung, wobei dies weitgehend gleichmäßig über den gesamten Umgang betrachtet geschieht.

Aus der DE 10 2008 033 959 A1 ist eine elektrische Maschine bekannt, deren Wickelköpfe durch radial nach außen strömende Kühlluft gekühlt werden können, welche anschließend durch ein jeweiliges Leitblech in Umfangsrichtung umgelenkt werden kann. Dabei ist das Leitblech radial weiter außen als der jeweilige Wickelkopf angeordnet und deckt zumindest drei Viertel des Umfangs ab, so dass die Kühlluft durch die verbleibende Öffnung von maximal einem Viertel des Umfangs nach radial außen abfließen kann.

Auch aus EP 2 512 009 A1, DE 195 44 699 A1, EP 2 109 207 A2, US 5 652 469 und US 2004/0084976 A1 sind Kühlkonzepte von elektrischen Maschinen, insbesondere von Wickelköpfen von elektrischen Maschinen, bekannt.

Der Erfindung liegt die Aufgabe zugrunde, die Kühlung des Wickelkopfs einer elektrischen Maschine zu verbessern.
Diese Aufgabe wird bei einer elektrischen Maschine der eingangs genannten Art durch zumindest ein zweites Leitelement gelöst, welches strömungstechnisch stromabwärts des jeweiligen Wickelkopfs angeordnet ist, wobei das zumindest eine zweite Leitelement zweite Aussparungen aufweist, wobei der jeweilige Wickelkopf in radialer Richtung zwischen dem zumindest einen ersten Leitelement und dem zumindest einen einen zweiten Leitelement angeordnet ist, wobei in axialer Verlängerung des jeweiligen Wickelkopfs zumindest ein ringförmiges Leitelement angeordnet ist, welches sich in radialer Richtung zumindest vom zumindest einen ersten Leitelement zum zumindest einen zweiten Leitelement erstreckt.

Durch das zumindest eine erste Leitelement kann eine Kühlmittel-Strömung, welche strömungstechnisch stromaufwärts des ersten Leitelements beispielsweise gleichmäßig in Richtung zum jeweiligen Wickelkopf weist, gezielt beschleunigt werden. Dies kann dadurch erreicht werden, dass das zumindest eine erste Leitelement stromaufwärts des jeweiligen Wickelkopfs angeordnet ist und das Kühlmittel somit das jeweilige erste Leitelement direkt anströmt. Die Erhöhung der Strömungsgeschwindigkeit der Kühlmittel-Strömung ergibt sich dann dadurch, dass das zumindest eine erste Leitelement eine Verengung des für die Kühlmittel-Strömung zur Verfügung stehenden Strömungsquerschnittes bewirkt. Durch die erhöhte Strömungsgeschwindigkeit der Kühlmittel-Strömung zum jeweiligen Wickelkopf wird eine bessere Kühlung des jeweiligen Wickelkopfs erzielt.

Beispielsweise kann das zumindest eine erste Leitelement in jenem axialen Bereich der elektrischen Maschine angeordnet sein, in welchem sich auch der jeweilige Wickelkopf befindet, wobei das zumindest eine erste Leitelement radial weiter innen als der jeweilige Wickelkopf angeordnet ist. Die Kühlmittel-Strömung weist entsprechend von radial innen nach radial außen und wird beispielsweise durch einen im selben axialen Bereich angeordneten Ventilator erzeugt. Alternativ kann die Kühlmittel-Strömung von radial außen nach radial innen weisen und das zumindest eine erste Leitelement entsprechend radial weiter außen als der jeweilige Wickelkopf angeordnet sein. Denkbar ist auch, dass ein an der jeweiligen axialen Stirnseite der elektrischen Maschine angeordneter Ventilator die Kühlmittel-Strömung erzeugt, so dass die Kühlmittel-Strömung zunächst zur axialen Mitte weist und im axialen Bereich des Wickelkopfs beispielsweise durch ein Umlenkelement in eine nach radial außen weisende Kühlmittel-Strömung umgelenkt wird. In beiden Fällen trifft somit das gleichmäßig nach radial außen strömende Kühlmittel auf das zumindest eine erste Leitelement. Hierbei kann das zumindest eine erste Leitelement beispielsweise im Wesentlichen hohlzylindrisch ausgebildet sein. Weiterhin kann die Strömungsrichtung der Kühlmittel-Strömung durch das zumindest eine erste Leitelement in Umfangsrichtung umgelenkt werden. Hierzu kann das zumindest eine erste Leitelement beispielsweise über zusätzliche Umlenkelemente verfügen.

Die Umlenkung der Kühlmittel-Strömung in Umfangsrichtung kann dabei eine weitere Verbesserung der Kühlung des jeweiligen Wickelkopfs bewirken, da der jeweilige Wickelkopf für eine Kühlmittel-Strömung mit einer Strömungs-Komponente in Umfangsrichtung besser zugänglich ist und somit die sonst schwer zugänglichen Stellen des jeweiligen Wickelkopfs besser gekühlt werden können.

Das zumindest eine erste Leitelement kann dabei in Umfangsrichtung vollständig umlaufend oder nur teilweise umlaufend ausgebildet sein, wobei das zumindest eine erste Leitelement dabei im Wesentlichen konzentrisch zur Rotorachse angeordnet sein kann.

Die vorteilhaften Wirkungen des zumindest einen ersten Leitelements, welches stromaufwärts des jeweiligen Wickelkopfs angeordnet ist, können besonders effektiv durch das zumindest eine zweite Leitelement unterstützt werden, welches stromabwärts des jeweiligen Wickelkopfs angeordnet ist. Denn durch das zumindest eine zweite Leitelement kann die Kühlmittel-Strömung durch das zumindest eine erste Leitelement und den jeweiligen Wickelkopf derart geführt werden, dass insgesamt die Strömungsverluste verringert werden können und somit die Kühlwirkung der Kühlmittel-Strömung am jeweiligen Wickelkopf verbessert werden kann. Weiterhin erlaubt das zumindest eine zweite Leitelement eine zusätzliche Erhöhung der Strömungsgeschwindigkeit der Kühlmittel-Strömung am jeweiligen Wickelkopf, was ebenfalls die Kühlwirkung verbessert. Dabei können die zweiten Aussparungen in Strömungsrichtung beispielsweise wie Düsen oder wie Diffusoren ausgeführt sein.

Das zumindest eine ringförmige Leitelement stellt dabei sicher, dass die radial nach außen strömende Kühlmittel-Strömung nicht in axialer Richtung entweichen kann. Dies ist besonders vorteilhaft, wenn das zumindest eine erste Leitelement und/oder das zumindest eine zweite Leitelement eine Verengung des Strömungsquerschnitts radialer Richtung bewirkt. Das Kühlmittel tritt dann von radial innen kommend durch das zumindest eine erste Leitelement hindurch, strömt durch den jeweiligen Wickelkopf nach radial außen und wird dabei in axialer Richtung einerseits durch den Stator und andererseits durch das zumindest eine ringförmige Leitelement weiter nach radial außen geführt. Schließlich tritt das Kühlmittel nach radial außen durch das zumindest eine zweite Leitelement hindurch. Alternativ kann die Kühlmittel-Strömung auch in umgekehrter Richtung, das heißt von radial außen nach radial innen, weisen, wobei das zumindest eine erste Leitelement dann radial weiter außen als der jeweilige Wickelkopf angeordnet ist und das zumindest eine zweite Element Leitelement entsprechend radial weiter innen als der jeweilige Wickelkopf angeordnet ist. Die jeweilige radiale Führung der Kühlmittel-Strömung erlaubt eine besonders effiziente Kühlwirkung am jeweiligen Wickelkopf.

Eine zusätzliche Verbesserung der Kühlung des Wickelkopfs kann beispielsweise durch weitere Aussparungen im zumindest einen ringförmigen Leitelement bewirkt werden, falls durch diese weiteren Aussparungen ein zusätzlicher Kühlmittel-Strom in axialer Richtung in den Bereich des Wickelkopfs eingebracht wird.

Bei einer vorteilhaften Ausgestaltung der Erfindung weist das zumindest eine erste Leitelement erste Aussparungen auf.

Die ersten Aussparungen können dabei auch als erste Öffnungen, beispielsweise in Form von ersten, durch das zumindest eine erste Leitelement hindurchführenden Bohrungen ausgeführt sein. Dabei können sich die ersten Aussparungen bzw. die ersten Öffnungen in Strömungsrichtung beispielsweise aufweiten oder verjüngen. Soll zusätzlich eine Umlenkung der Kühlmittel-Strömung in Umfangsrichtung erreicht werden, können die ersten Aussparungen bzw. ersten Öffnungen nicht genau entlang der anfänglichen Strömungsrichtung ausgerichtet sein, sondern zusätzlich eine Komponente in Umfangsrichtung aufweisen.

Bei einer zunächst in radialer Richtung verlaufenden Kühlmittel-Strömung können die ersten Aussparungen beispielsweise als in radialer Richtung in das zumindest eine erste Leitelement eingebrachte Bohrungen ausgeführt sein. Um eine Umlenkung der Strömungsrichtung in Umfangsrichtung zu erreichen, weisen die entsprechenden Bohrungen nicht genau nach radial außen, sondern verlaufen jeweils entlang einer Linie, welche jeweils noch eine Komponente in Umfangsrichtung aufweist.

Die genannten ersten Aussparungen bzw. ersten Öffnungen des zumindest einen ersten Leitblech können dabei bezüglich der Kühlmittel-Strömung als Düsen fungieren, die den Strömungsquerschnitt für die Kühlmittel-Strömung verengen und somit die Erhöhung der Strömungsgeschwindigkeit bewirken. Vorteilhafterweise bewirken die Düsen gleichzeitig die Umlenkung der Kühlmittel-Strömung in Umfangsrichtung, so dass die ersten Aussparungen bzw. ersten Öffnungen als Umlenkdüsen ausgestaltet sein können.

Bei einer vorteilhaften Ausgestaltung der Erfindung weist der zumindest eine Wickelkopf dabei elektrische Leiter auf, zwischen welchen der jeweilige Wickelkopf Kühlkanäle aufweist, wobei die Kühlmittel-Strömung mittels der ersten Aussparungen in zumindest einen Teil der Kühlkanäle leitbar ist

Die Kühlkanäle können beispielsweise dadurch gebildet werden, dass ein elektrischer Leiter jeweils nach einem bestimmten Abstand zum nächsten benachbarten elektrischen Leiter angeordnet ist. Insbesondere verlaufen die elektrischen Leiter in Nuten im Stator der elektrischen Maschine, wobei der Abstand zwischen zwei Nuten in etwa der Breite eines solchen Kühlkanals entspricht. Die ersten Aussparungen des zumindest einen ersten Leitelementes sind dabei derart angeordnet, dass die Kühlmittel-Strömung durch die ersten Aussparungen in zumindest einen Teil der Kühlkanäle geleitet werden kann, wobei vorzugsweise alle Kühlkanäle mit der Kühlmittel-Strömung versorgbar sind.

Die Kühlkanäle verlaufen in der Regel in radialer Richtung, das heißt in derselben Richtung, wie die Nuten in den Stator eingebracht sind. Da die elektrischen Leiter von einer Nut in eine andere Nut geführt werden, verlaufende Kühlkanäle dabei jedoch nicht immer genau in axialer Richtung, sondern sind in Umfangsrichtung teilweise verdreht.

Bei einer anfänglich radialen Strömungsrichtung ist das zumindest eine erste Leitelement vorzugsweise derart ausgeführt, dass die Kühlmittel-Strömung insbesondere entlang des gesamten axialen Bereichs des jeweiligen Wickelkopfs in die radial innen liegenden bzw. radial außen liegenden Öffnungen der Kühlkanäle eingeleitet wird, wobei die Position der jeweiligen Öffnungen der Kühlkanäle entlang der axialen Richtung in Umfangsrichtung abschnittsweise ähnlich einer Schraubenform variieren kann.

Das an die jeweilige anfängliche Strömungsrichtung der Kühlmittel-Strömung angepasste, zumindest eine erste Leitelement bewirkt somit eine besonders gute Kühlmittelversorgung des jeweiligen Wickelkopfs, so dass die Leiter des Wickelkopfs an allen Stellen zuverlässig gekühlt werden können.

Bei einer weiteren vorteilhaften Ausgestaltung der Erfindung ist dabei das zumindest eine erste Leitelement zwischen zumindest einem Paar von ersten Aussparungen zumindest abschnittsweise propellerblattförmig ausgestaltet.

Durch die zumindest abschnittsweise Ausgestaltung des zumindest einen ersten Leitelement in Form eines Propellerblattes ist zum einen die Erhöhung der Strömungsgeschwindigkeit der Kühlmittel-Strömung zum jeweiligen Wickelkopf bewirkbar, und zum anderen kann dadurch in effizienter Art und Weise eine vorteilhafte Umlenkung der Kühlmittel-Strömung in Umfangsrichtung erreicht werden. Zusätzlich erlaubt diese Ausgestaltung des zumindest einen ersten Leitelements die Reduktion von Strömungsverlusten der Kühlmittel-Strömung.

Bei einer zunächst radialen Strömungsrichtung kann das Propellerblatt wie ein Propellerblatt eines Ventilators, der eine radiale Strömungsrichtung eines Kühlmittels erzeugen kann, bzw. bei einer zunächst axialen Strömungsrichtung beispielsweise ähnlich wie ein Propellerblatt eines Ventilators, der eine axiale Strömungsrichtung eines Kühlmittels erzeugen kann. Für die radiale Strömungsrichtung kann das Propellerblatt beispielsweise wie ein Propellerblatt eines Radialventilators und für die axiale Strömungsrichtung beispielsweise wie ein Propellerblatt eines Axialventilators ausgeformt sein. Denkbar ist auch die Ausformung des Propellerblatts wie ein Propellerblatt eines Halbaxiallüfters oder anderer Ventilatoren, welche die gewünschte Strömungsrichtung des Kühlmittels erzeugen können. Generell kann das jeweilige Propellerblatt dabei flach oder strömungstechnisch effizient geschwungen ausgeführt sein, um Strömungsverluste weiter zu minimieren.

Insbesondere ist das zumindest eine erste Leitelement insgesamt als für die jeweilige eintreffende Kühlmittel-Strömung angepasster Propeller mit mehreren Propellerblättern ausgeführt.

Bei einer weiteren vorteilhaften Ausgestaltung der Erfindung sind die zweiten Aussparungen dabei jeweils versetzt zu den ersten Aussparungen angeordnet. Durch die versetzte Anordnung der zweiten Aussparungen in Bezug zur jeweiligen Position der ersten Aussparungen kann die Strömungsgeschwindigkeit der Kühlmittel-Strömung weiter erhöht werden. Insbesondere kann dadurch gewährleistet werden, dass der jeweilige Wickelkopf in seiner Gesamtheit möglichst gut mit der Kühlmittel-Strömung versorgt wird. Dies ermöglicht somit eine zusätzliche Verbesserung der Kühlwirkung am jeweiligen Wickelkopf. Dabei kann der Versatz der zweiten Aussparungen in Bezug auf die ersten Aussparungen in axialer Richtung oder in Umfangsrichtung erfolgen, wobei durch den Versatz in Umfangsrichtung gleichzeitig eine weitere Umlenkung der Kühlmittel-Strömung in Umfangsrichtung erreicht werden kann.

Bei einer weiteren vorteilhaften Ausgestaltung der Erfindung ist das zumindest eine zweite Leitelement dabei zwischen zumindest einem Paar von zweiten Aussparungen zumindest abschnittsweise propellerblattförmig ausgestaltet.

Dadurch, dass auch das zumindest eine zweite Leitelement zumindest abschnittsweise in Form eines Propellerblattes ausgestaltet ist, kann wiederum eine Erhöhung der Strömungsgeschwindigkeit der Kühlmittel-Strömung zum jeweiligen Wickelkopf bewirkt werden. Zusätzlich erlaubt diese Ausgestaltung des zumindest einen zweiten Leitelements die Reduktion von Strömungsverlusten der Kühlmittel-Strömung.

Dabei kann das jeweilige Propellerblatt in Abhängigkeit der Strömungsrichtung der Kühlmittel-Strömung, welche aus dem jeweiligen Wickelkopf herausströmt, ähnlich wie ein Propellerblatt eines Ventilators ausgeführt sein und dabei flach oder strömungstechnisch effizient geschwungen ausgeführt sein kann, um Strömungsverluste weiter zu minimieren.

Insbesondere ist das zumindest eine zweite Leitelement insgesamt als für die jeweilige eintreffende Kühlmittel-Strömung angepasster Propeller mit mehreren Propellerblättern ausgeführt.

Vorzugsweise weist die elektrische Maschine zur Erzeugung der Kühlmittel-Strömung zumindest einen Ventilator auf.

Bei einer weiteren vorteilhaften Ausgestaltung der Erfindung ist die elektrische Maschine mit einer Leistung von mehr als 1 MW und/oder einer Drehzahl von weniger als 750 Umdrehungen pro Minute, insbesondere weniger als 200 Umdrehungen pro Minute, betreibbar.

Bei derartigen elektrischen Maschinen entsteht beim Betrieb am jeweiligen Wickelkopf eine vergleichsweise große Menge Abwärme, welche effizient und zuverlässig abtransportiert werden muss. Generell sind dabei elektrische Maschinen besonders problematisch, die vergleichsweise niedrige Betriebsdrehzahlen aufweisen und lediglich mittels eines mit dem Rotor der elektrischen Maschine verbundenen Ventilators gekühlt werden, da entsprechend auch der Ventilator nur mit niedrigen Drehzahlen betrieben wird und vergleichsweise geringe Mengen an Kühlmittel umwälzen kann. Durch die oben beschriebenen Ausführungen der erfindungsgemäßen elektrischen Maschine kann jedoch auch bei niedrigen Betriebsdrehzahlen eine ausreichende Kühlung des jeweiligen Wickelkopfs gewährleistet werden.

Im Folgenden wird die Erfindung anhand der in den Figuren dargestellten Ausführungsbeispiele näher beschrieben und erläutert. Es zeigen:
- FIG 1: ein erstes Beispiel einer elektrischen Maschine mit zunächst radialer Kühlmittel-Strömung,
- FIG 2: ein Beispiel eines ersten Leitelements für das erste Beispiel,
- FIG 3: ein zweites Beispiel mit zunächst axialer Kühlmittel-Strömung,
- FIG 4: ein Beispiel eines ersten Leitelements für das zweite Beispiel,
- FIG 5: ein erstes Ausführungsbeispiel der erfindungsgemäßen elektrischen Maschine, und
- FIG 6: ein zweites Ausführungsbeispiel der erfindungsgemäßen elektrischen Maschine.

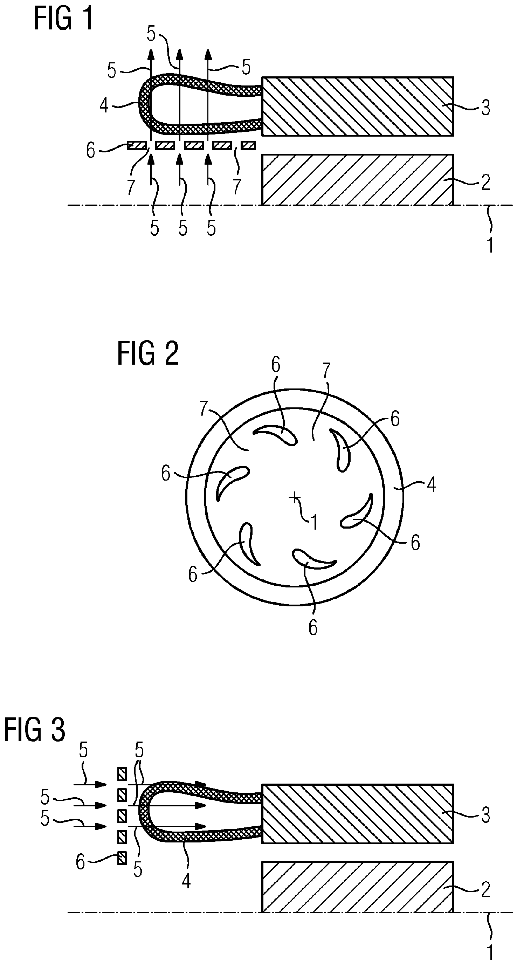

Figur 1 zeigt ein erstes Beispiel einer elektrischen Maschine mit zunächst radialer Kühlmittel-Strömung 5, wobei das erste Beispiel nicht von der vorliegenden Erfindung umfasst ist und wobei ein Ausschnitt eines Längsschnitts der elektrischen Maschine dargestellt ist. Die elektrische Maschine verfügt über einen Stator 3 und einen Rotor 2, die beide entlang einer Rotorachse 1 ausgerichtet sind. Aus dem Stator 3 ragt an beiden axialen Enden ein Wickelkopf 4 heraus, wobei aus Gründen der Übersichtlichkeit der Wickelkopf 4 nur einer Stirnseite der elektrischen Maschine näher dargestellt ist.

Der Wickelkopf 4 kann durch die Kühlmittel-Strömung 5 gekühlt werden, welche im Rahmen dieses Beispiels von radial innen nach radial außen strömt. Stromaufwärts des Wickelkopfs 4, das heißt im axialen Bereich des Wickelkopfs 4 und radial weiter innen als der Wickelkopf 4, ist ein erstes Leitelement 6 angeordnet, welches eine Erhöhung der Strömungsgeschwindigkeit der Kühlmittel-Strömung 5 zum Wickelkopf 4 bewirkt. Im Rahmen des ersten Beispiels weist das erste Leitelement 6 hierzu erste Aussparungen 7 auf, welche den Strömungsquerschnitt für die nach radial außen auf den Wickelkopf 4 strömende Kühlmittel-Strömung 5 verengen.

Im Rahmen des ersten Beispiels deckt das erste Leitelement 6 bei einer radialen Draufsicht auf den Wickelkopf 4 von radial innen nach radial außen dabei den Wickelkopf 4 ab, da die axiale Ausdehnung des ersten Leitelements 6 mindestens so groß ist wie die axiale Ausdehnung des Wickelkopfs 4. Alternativ kann aber auch vorgesehen sein, dass die axiale Ausdehnung des ersten Leitelements 6 kleiner als die axiale Ausdehnung des Wickelkopfs 4 ist.

Die radial nach außen strömende Kühlmittel-Strömung 5 kann beispielsweise durch einen Ventilator erzeugt werden, der beispielsweise im axialen Bereich des Wickelkopfs 4 und radial weiter innen als der Wickelkopf 4 angeordnet ist. Alternativ kann hierzu auch ein Ventilator verwendet werden, welcher zunächst eine Kühlmittel-Strömung 5 erzeugt, die in axialer Richtung von der axialen Stirnseite der elektrischen Maschine zur axialen Mitte strömt und im axialen Bereich des Wickelkopfs 4, insbesondere durch ein Umlenkelement, nach radial außen umgelenkt wird.

Alternativ kann die Kühlmittel-Strömung 5 von radial außen nach radial innen weisen und das erste Leitelement 6 entsprechend radial weiter außen als der Wickelkopf 4 angeordnet sein.

Figur 2 zeigt ein Beispiel eines ersten Leitelements 6 für das erste Beispiel der elektrischen Maschine, wobei eine axiale Draufsicht, ausgehend von einer der Stirnseiten der elektrischen Maschine, dargestellt ist. Dabei bezeichnen gleiche Bezugszeichen wie in Figur 1 gleiche Gegenstände. Aus Gründen der Übersichtlichkeit sind lediglich die Rotorachse 1, das erste Leitelement 6, die ersten Aussparungen 7 und der Wickelkopf 4 dargestellt.

Das erste Leitelement 6 ist derart ausgestaltet, dass die von radial innen kommende Kühlmittel-Strömung 5 durch das erste Leitelement 6 in Umfangsrichtung umgelenkt wird und dabei die Strömungsgeschwindigkeit der Kühlmittel-Strömung 5 erhöht wird. Dies wird dadurch erreicht, dass das erste Leitelement 6 zwischen einem Paar von Aussparungen 7 abschnittsweise wie ein Propellerblatt ausgeformt ist. Hierzu weist das erste Leitelement 6 insbesondere schaufelförmige Elemente auf, die ähnlich einem Propellerblatt, insbesondere eines Ventilators, beispielsweise eines Radialventilators, ausgestaltet sind. Das jeweilige Propellerblatt kann dabei flach oder strömungstechnisch effizient geschwungen ausgeführt sein kann, um Strömungsverluste weiter zu minimieren.

Figur 3 zeigt ein zweites Beispiel einer elektrischen Maschine mit zunächst axialer Kühlmittel-Strömung 5, wobei das zweite Beispiel nicht von der vorliegenden Erfindung umfasst ist. Im Unterschied zum ersten Beispiel strömt die Kühlmittel-Strömung 5 beim zweiten Beispiel in axialer Richtung von der axialen Stirnseite der elektrischen Maschine zu ihrer axialen Mitte. Das erste Leitelement 6 ist wiederum stromaufwärts des Wickelkopfs 4 angeordnet, indem das erste Leitelement 6 nunmehr am axialen Ende des Wickelkopfs 4 angeordnet ist. Im Rahmen des Beispiels weist das erste Leitelement 6 hierzu erste Aussparungen 7 auf, welche den Strömungsquerschnitt für die axial auf den Wickelkopf 4 strömende Kühlmittel-Strömung 5 verengen.

Im Rahmen des Beispiels deckt das erste Leitelement 6 bei einer axialen Draufsicht auf den Wickelkopf 4 dabei den Wickelkopf 4 ab, da die radiale Ausdehnung des ersten Leitelements 6 mindestens so groß ist wie die radiale Ausdehnung des Wickelkopfs 4. Alternativ kann aber auch vorgesehen sein, dass die radiale Ausdehnung des ersten Leitelements 6 kleiner als die radiale Ausdehnung des Wickelkopfs 4 ist.

Die axial strömende Kühlmittel-Strömung 5 kann beispielsweise durch einen Ventilator erzeugt werden, der beispielsweise an der axialen Stirnseite der elektrischen Maschine angeordnet ist. Alternativ kann hierzu auch ein Ventilator verwendet werden, welcher insbesondere an der axialen Stirnseite der elektrischen Maschine angeordnet ist und zunächst eine Kühlmittel-Strömung 5 erzeugt, die in radialer Richtung strömt. Beispielsweise kann die radial nach außen strömende Kühlmittel-Strömung dann durch ein Umlenkelement in axiale Richtung umgelenkt werden, um schließlich in axialer Richtung zum Wickelkopf 4 strömen.

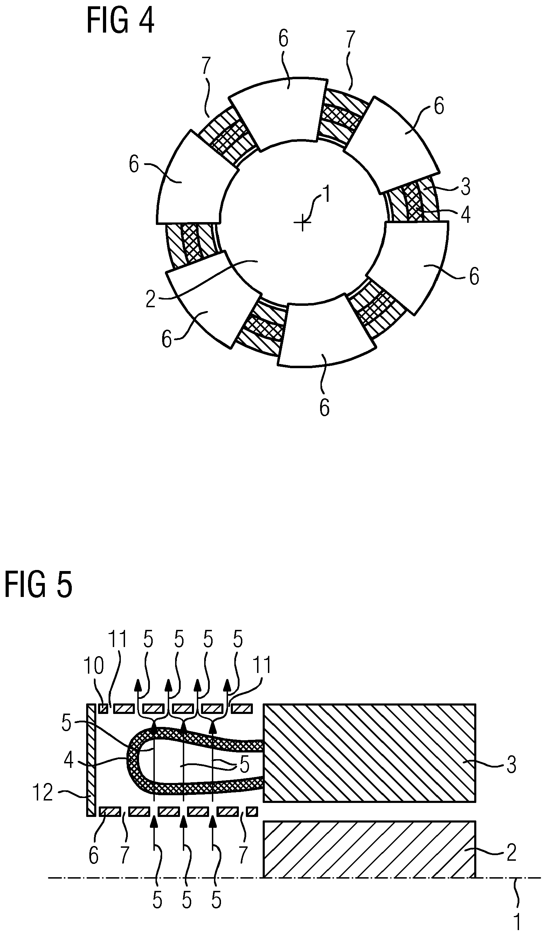

Figur 4 zeigt ein Beispiel eines ersten Leitelements 6 für das zweite Beispiel der elektrischen Maschine, wobei eine axiale Draufsicht, ausgehend von einer der Stirnseiten der elektrischen Maschine, dargestellt ist. Aus Gründen der Übersichtlichkeit sind lediglich die Rotorachse 1, das erste Leitelement 6, die ersten Aussparungen 7 und der Wickelkopf 4 sowie der Rotor 2 und der Stator 3 dargestellt, wobei der Rotor 2 und der Stator 3 bei dieser Ansicht teilweise durch das erste Leitelement 6 bzw. den Wickelkopf 4 verdeckt werden.

Das erste Leitelement 6 ist derart ausgestaltet, dass die von der axialen Stirnseite der elektrischen Maschine kommende Kühlmittel-Strömung 5 durch das erste Leitelement 6 in Umfangsrichtung umgelenkt wird und dabei die Strömungsgeschwindigkeit der Kühlmittel-Strömung 5 erhöht wird. Dies wird dadurch erreicht, dass das erste Leitelement 6 zwischen einem Paar von Aussparungen 7 abschnittsweise wie ein Propellerblatt ausgeformt ist. Hierzu weist das erste Leitelement 6 insbesondere schaufelförmige Elemente auf, die ähnlich einem Propellerblatt, insbesondere eines Ventilators, beispielsweise eines Axialventilators, ausgestaltet sind. Das jeweilige Propellerblatt kann dabei flach oder strömungstechnisch effizient geschwungen ausgeführt sein kann, um Strömungsverluste weiter zu minimieren.

Figur 5 zeigt ein erstes Ausführungsbeispiel der erfindungsgemäßen elektrischen Maschine, wobei das erste Ausführungsbeispiel zunächst denselben Aufbau wie das erste Beispiel aufweist.

Zusätzlich ist ein zweites Leitelement 10 vorgesehen, welches stromabwärts des Wickelkopfs angeordnet ist, das heißt im axialen Bereich des Wickelkopfs 4 und radial weiter außen als der Wickelkopf 4. Das zweite Leitelement 10 weist dabei zweite Aussparungen 11 auf, welche eine zusätzliche Erhöhung der Strömungsgeschwindigkeit der Kühlmittel-Strömung 5 bewirken. Hierzu sind die zweiten Aussparungen 11 versetzt zu den ersten Aussparungen 7 angeordnet, wobei der Versatz im Rahmen des ersten Ausführungsbeispiels in axialer Richtung ist. Das zweite Leitelement 10 kann dabei ähnlich ausgeführt sein wie das in der Figur 2 dargestellte erste Leitelement.

Im Vergleich zum ersten Beispiel weist die elektrische Maschine des ersten Ausführungsbeispiels zusätzlich ein ringförmiges Leitelement 12 auf, welches in axialer Verlängerung des Wickelkopfs 4 angeordnet ist und sicherstellt, dass die Kühlmittel-Strömung 5 den Bereich des Wickelkopfs 4 nicht in axialer Richtung verlässt. Hierzu ist das ringförmige Leitelement 12 in axialer Verlängerung des ersten Leitelement 6 und des zweiten Leitelement 10 angeordnet und erstreckt sich in radialer Richtung zumindest vom ersten Leitelement 6 zum zweiten Leitelement 10.

Prinzipiell ist dabei denkbar, dass das ringförmige Leitelement 12 über weitere Aussparungen verfügt, durch welche ein zusätzlicher Kühlmittel-Strom in axialer Richtung in den Bereich des Wickelkopfs 4 eingebracht wird, um die Kühlung des Wickelkopfs 4 weiter zu verbessern.

Denkbar ist weiterhin, die elektrische Maschine ohne das ringförmige Leitelement 12 auszuführen.

Alternativ kann die Kühlmittel-Strömung 5 von radial außen nach radial innen weisen und das erste Leitelement 6 entsprechend radial weiter außen als der Wickelkopf 4 angeordnet sein und das zweite Leitelement 10 entsprechend radial weiter innen als der Wickelkopf 4 angeordnet sein.

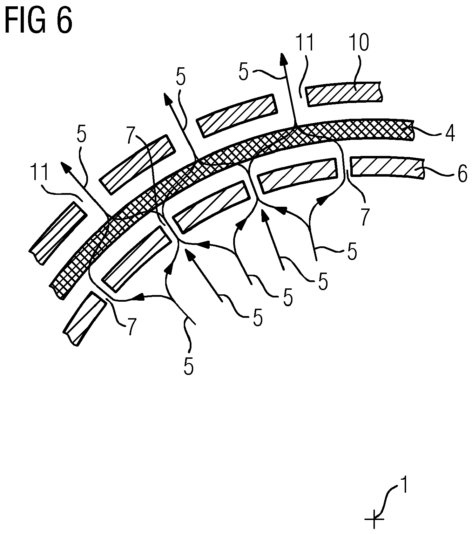

Figur 6 zeigt ein zweites Ausführungsbeispiel der erfindungsgemäßen elektrischen Maschine, wobei das zweite Ausführungsbeispiel zunächst denselben Aufbau wie das erste Ausführungsbeispiel aufweist und wobei ein Ausschnitt eines Querschnitts der elektrischen Maschine in axialer Höhe des Wickelkopfs 4 dargestellt ist. Im Unterschied zum ersten Ausführungsbeispiel ist der Versatz zwischen dem ersten Leitelement 6 und dem zweiten Leitelement 10 im zweiten Ausführungsbeispiel in Umfangsrichtung, wodurch eine besonders vorteilhafte Umlenkung der Kühlmittel-Strömung 5 in Umfangsrichtung bewirkt wird, was in einer verbesserten Kühlung des Wickelkopfs 4 resultiert.

Dabei kann die elektrische Maschine auch ohne das ringförmige Leitelement 12 ausgeführt werden. Weiterhin kann die Kühlmittel-Strömung 5 alternativ von radial außen nach radial innen weisen und das erste Leitelement 6 entsprechend radial weiter außen als der Wickelkopf 4 angeordnet sein und das zweite Leitelement 10 entsprechend radial weiter innen als der Wickelkopf 4 angeordnet sein.

Zusammenfassend betrifft die Erfindung eine elektrische Maschine umfassend einen entlang einer Rotorachse ausgerichteten Rotor, einen konzentrisch zur Rotorachse angeordneten Stator, zumindest einen konzentrisch zur Rotorachse angeordneten Wickelkopf, welcher jeweils in axialer Richtung aus dem Stator herausragt und durch eine Kühlmittel-Strömung kühlbar ist sowie zumindest ein erstes Leitelement, welches strömungstechnisch stromaufwärts des jeweiligen Wickelkopfs angeordnet ist, wobei das zumindest eine erste Leitelement derart ausgebildet ist, dass eine Erhöhung der Strömungsgeschwindigkeit der Kühlmittel-Strömung zum jeweiligen Wickelkopf bewirkbar ist. Um die Kühlung des Wickelkopfs zu verbessern, wird vorgeschlagen, dass die elektrischen Maschine der eingangs genannten Art zumindest ein zweites Leitelement aufweist, welches strömungstechnisch stromabwärts des jeweiligen Wickelkopfs angeordnet ist, wobei das zumindest eine zweite Leitelement zweite Aussparungen aufweist, wobei der jeweilige Wickelkopf in radialer Richtung zwischen dem zumindest einen ersten Leitelement und dem zumindest einen einen zweiten Leitelement angeordnet ist, wobei in axialer Verlängerung des jeweiligen Wickelkopfs zumindest ein ringförmiges Leitelement angeordnet ist, welches sich in radialer Richtung zumindest vom zumindest einen ersten Leitelement zum zumindest einen zweiten Leitelement erstreckt.

## Patentansprüche

1. Elektrische Maschine umfassend
- einen entlang einer Rotorachse (1) ausgerichteten Rotor (2),
- einen konzentrisch zur Rotorachse (1) angeordneten Stator (3),
- zumindest einen konzentrisch zur Rotorachse (1) angeordneten Wickelkopf (4), welcher jeweils in axialer Richtung aus dem Stator (3) herausragt und durch eine Kühlmittel-Strömung (5) kühlbar ist, sowie
- zumindest ein erstes Leitelement (6), welches strömungstechnisch stromaufwärts des jeweiligen Wickelkopfs (4) angeordnet ist,
wobei das zumindest eine erste Leitelement (6) derart ausgebildet ist, dass eine Erhöhung der Strömungsgeschwindigkeit der Kühlmittel-Strömung (5) zum jeweiligen Wickelkopf (4) bewirkbar ist,
**gekennzeichnet durch** zumindest ein zweites Leitelement (10), welches strömungstechnisch stromabwärts des jeweiligen Wickelkopfs (4) angeordnet ist,
wobei das zumindest eine zweite Leitelement (10) zweite Aussparungen (11) aufweist,
wobei der jeweilige Wickelkopf (4) in radialer Richtung zwischen dem zumindest einen ersten Leitelement (6) und dem zumindest einen einen zweiten Leitelement (10) angeordnet ist, wobei in axialer Verlängerung des jeweiligen Wickelkopfs (4) zumindest ein ringförmiges Leitelement (12) angeordnet ist, welches sich in radialer Richtung zumindest vom zumindest einen ersten Leitelement (6) zum zumindest einen zweiten Leitelement (10) erstreckt.

2. Elektrische Maschine nach Anspruch 1,
wobei das zumindest eine erste Leitelement (6) erste Aussparungen (7) aufweist.

3. Elektrische Maschine nach Anspruch 2,
wobei der zumindest eine Wickelkopf (4) elektrische Leiter aufweist, zwischen welchen der jeweilige Wickelkopf Kühlkanäle aufweist,
wobei die Kühlmittel-Strömung mittels der ersten Aussparungen in zumindest einen Teil der Kühlkanäle leitbar ist.

4. Elektrische Maschine nach Anspruch 2 oder 3,
wobei das zumindest eine erste Leitelement (6) zwischen zumindest einem Paar von ersten Aussparungen (7) zumindest abschnittsweise propellerblattförmig ausgestaltet ist.

5. Elektrische Maschine nach einem der Ansprüche 2-4,
wobei die zweiten Aussparungen (11) jeweils versetzt zu den ersten Aussparungen (7) angeordnet sind.

6. Elektrische Maschine nach einem der vorhergehenden Ansprüche,
wobei das zumindest eine zweite Leitelement (10) zwischen zumindest einem Paar von zweiten Aussparungen (11) zumindest abschnittsweise propellerblattförmig ausgestaltet ist.

7. Elektrische Maschine nach einem der vorhergehenden Ansprüche,
wobei die elektrische Maschine zumindest einen Ventilator zur Erzeugung der Kühlmittel-Strömung (5) aufweist.

8. Elektrische Maschine nach einem der vorhergehenden Ansprüche,
wobei die elektrische Maschine mit einer Leistung von mehr als 1 MW und/oder einer Drehzahl von weniger als 750 Umdrehungen pro Minute betreibbar ist.

## Claims

1. Electric machine comprising
- a rotor (2) aligned along an axis of rotation (1),
- a stator (3) arranged concentrically with respect to the rotor axis (1),
- at least one winding head (4) arranged concentrically with respect to the rotor axis (1), which projects in each case in the axial direction out of the stator (3) and can be cooled by a coolant flow (5), and
- at least one first conducting element (6) which in terms of the flow is disposed upstream of the respective winding head (4), wherein the at least one first conducting element (6) is designed in such a way that an increase in the flow rate of the coolant flow (5) to the respective winding head (4) can be effected, **characterised by** at least one second conducting element (10), which in terms of the flow is arranged downstream of the respective winding head (4),
wherein the at least one second conducting element (10) has second recesses (11),
wherein the respective winding head (4) is arranged in the radial direction between the at least one first conducting element (6) and the at least one second conducting element (10), wherein in the axial extent of the respective winding head (4) at least one ring-shaped conducting element (12) is arranged, which extends in the radial direction at least from at least one first conducting element (6) to the at least one second conducting element (10).

2. Electric machine according to claim 1,
wherein the at least one first conducting element (6) has first recesses (7).

3. Electric machine according to claim 2, wherein the at least one winding head (4) has electrical conductors, between which the respective winding head has cooling channels, wherein the coolant flow can be conducted into at least one part of the cooling channels by means of the first recesses.

4. Electric machine according to claim 2 or 3, wherein the at least one first conducting element (6) is configured at least in sections in the manner of a propeller blade between at least one pair of first recesses (7).

5. Electric machine according to one of claims 2-4,
wherein the second recesses (11) are each arranged offset to the first recesses (7).

6. Electric machine according to one of the preceding claims,
wherein the at least one second conducting element (10) is embodied at least in sections in the manner of a propeller blade between at least one pair of second recesses (11).

7. Electric machine according to one of the preceding claims,
wherein the electric machine has at least one ventilator for generating the coolant flow (5).

8. Electric machine according to one of the preceding claims,
wherein the electric machine can be operated with an output of more than 1 MW and/or a rotational speed of less than 750 rpm.

## Revendications

1. Machine électrique comprenant
- un rotor (2) orienté le long d'un axe (1) de rotor,
- un stator (3) disposé concentriquement à l'axe (1) du rotor,
- au moins une tête (4) de bobine, qui est disposée concentriquement à l'axe (1) du rotor, qui dépasse respectivement dans la direction axiale du stator (3) et qui peut être refroidie par un courant (5) de fluide réfrigérant, ainsi que
- au moins un premier élément (6) de conduit, qui est disposé en technique d'écoulement en amont de la tête (4) de bobine respective,
dans laquelle le au moins un premier élément (6) de conduit est constitué de manière à pouvoir provoquer une augmentation de la vitesse d'écoulement du courant (5) de fluide réfrigérant vers la tête (4) de bobine respective,
**caractérisée par** au moins un deuxième élément (10) de conduit, qui est disposé en technique d'écoulement en aval de la tête (4) de bobine respective,
le au moins un deuxième élément (10) de conduit ayant des deuxièmes évidements (11),
la tête (4) de bobine respective étant disposée dans la direction radiale entre le au moins un premier élément (6) de conduit et le au moins un deuxième élément (10) de conduit, au moins un élément (12) annulaire de conduit étant disposé dans le prolongement axial de la tête (4) de bobine respective et s'étendant dans la direction radiale au moins du au moins premier élément (6) de conduit au au moins un deuxième élément (10) de conduit.

2. Machine électrique suivant la revendication 1,
dans laquelle le au moins un premier élément (6) de conduit à de premiers évidements (7).

3. Machine électrique suivant la revendication 2,
dans laquelle la au moins une tête (4) de bobine a des conducteurs électriques entre lesquels la tête de bobine respective a des conduits de refroidissement,
le courant de fluide réfrigérant pouvant être conduit, au moyen des premiers évidements, dans au moins une partie des conduits de refroidissement.

4. Machine électrique suivant la revendication 2 ou 3,
dans laquelle au moins un premier élément (6) de conduit est conformé en forme de lame d'hélice, au moins par tronçon, entre au moins une paire de premiers évidements (7).

5. Machine électrique suivant l'une des revendications 2 à 4,
dans laquelle les deuxièmes évidements (11) sont disposés de manière décalée par rapport aux premiers évidements (7).

6. Machine électrique suivant l'une des revendications précédentes,
dans laquelle le au moins un deuxième élément (10) de conduit est conformé en forme de lame d'hélice, au moins par tronçon, entre au moins une paire de deuxièmes évidements (11).

7. Machine électrique suivant l'une des revendications précédentes,
dans laquelle la machine électrique a au moins un ventilateur de production du courant (5) de fluide réfrigérant.

8. Machine électrique suivant l'une des revendications précédentes,
dans laquelle la machine électrique peut fonctionner à une puissance de plus de 1 MW et/ou à une vitesse de rotation de moins de 750 tours à la minute.
